# EUROPÄISCHE PATENTSCHRIFT

(11) **EP 1 629 023 B1**
(45) Veröffentlichungstag und Bekanntmachung des Hinweises auf die Patenterteilung: **20.12.2006**
(21) Anmeldenummer: 04732284.7
(22) Anmeldetag: 12.05.2004
(51) Int. Cl.: C08G 18/78, C08G 18/80, C08G 18/79, C09D 175/00

(54) **VERFESTIGUNGSSTABILE BLOCKIERTE POLYISOCYANATE**
SOLIDIFICATION-STABLE BLOCKED POLYISOCYANATES
POLYISOCYANATES BLOQUES RESISTANT AU DURCISSEMENT

(30) Priorität: 21.05.2003 DE 10322911
(43) Veröffentlichungstag der Anmeldung: 01.03.2006
(73) Patentinhaber: Bayer MaterialScience AG, 51368 Leverkusen (DE)
(72) Erfinder: THIEBES, Christoph, 50670 Köln (DE); RICHTER, Frank, 51373 Leverkusen (DE); HALPAAP, Reinhard, 51519 Odenthal (DE); BAUMBACH, Beate, 51399 Burscheid (DE); MAGER, Dieter, 51373 Leverkusen (DE); FÜSSEL, Christian, 47918 Tönisvorst (DE)
(86) Internationale Anmeldenummer: PCT/EP2004/005072
(87) Internationale Veröffentlichungsnummer: WO 2004/104065

(56) Entgegenhaltungen:
- EP-A- 0 787 754
- WO-A-03/006524
- DE-A- 2 010 887
- DE-A- 3 742 181
- DE-A- 19 738 497

## Beschreibung

Die vorliegende Erfindung betrifft neue lagerstabile blockierte Polyisocyanate, ein Verfahren zu deren Herstellung und ihre Verwendung zur Herstellung von Beschichtungen.

Die Blockierung von Polyisocyanaten ist seit langem allgemein u.a. für die Herstellung von Vernetzerkomponenten für 1K-Polyurethan-Beschichtungssysteme beispielsweise für die Automobil-Erstlackierung, Kunststofflackierung und Coil Coating bekannt. Die Verwendung beispielsweise von 1,2,4-Triazol, Diisopropylamin oder Malonsäurediethylestern zur Polyisocyanat-Blockierung führt zu Beschichtungssystemen mit besonders niedriger Vemetzungstemperatur. Dies ist aus ökonomischer Sicht aber auch für die Lackierung thermoempfindlicher Substrate wie Kunststoffe von Bedeutung ("Polyurethane für Lacke und Beschichtungen", Vincentz Verlag, Hannover, 1999).

Organische Lösungen vor allem von mit 1,2,4-Triazol-, Düsopropylamin- oder Malonsäurediethylester- blockierten Polyisocyanaten sind allerdings nicht über Monate lagerfähig, da sie eine sehr hohe Neigung zu Verfestigung z.B. durch Auskristallisation des enthaltenen blockierten Polyisocyanats zeigen. Diese Neigung ist besonders ausgeprägt für Polyisocyanate mit Isocyanuratstruktur auf Basis linear aliphatischer Düsocyanate. Aus diesem Grund sind sie nicht für die Verwendung in lösemittelhaltigen 1K-PUR-Beschichtungssystemen geeignet.

In speziellen Fällen können blockierte Polyisocyanate, deren Lösungen in organischen Lösemitteln nicht zu Verfestigung z.B. durch Auskristallisation neigen, durch die Verwendung von zwei oder mehr unterschiedlichen Blockierungsmitteln (sog. Mischblockierung) erhalten werden (vgl. z.B. EP-A 0 600 314, EP-A 0 654 490). Gegenüber der Verwendung eines einzigen Blockierungsmittels stellt die Mischblockierung aber immer einen erhöhten Aufwand bei der Herstellung der blockierten Polyisocyanate dar. Darüber hinaus können die Lackeigenschaften durch die freigesetzte Blockierungsmittelinischung besonders unvorteilhaft beeinflusst werden, weshalb mischblockierte Polyisocyanate nicht allgemein einsetzbar sind.

Der Lehre aus DE-A 197 38 497 nach können blockierte Polyisocyanate, deren organische Lösungen stabil gegen Verfestigung z.B. durch Kristallisation sind, durch Reaktion von Mischungen cycloaliphatischer und aliphatischer Düsocyanate mit sekundären Aminen und anschließender partieller Umsetzung einiger NCO-Gruppen mit hydroxyfunktionellen Hydrazidverbindungen erhalten werden. Aus diesen Polyisocyanaten hergestellte Lackschichten weisen allerdings ein deutlich anderes Eigenschaftsprofil auf als solche, die rein auf aliphatischen oder cycloaliphatischen Diisocyanaten basieren, weshalb sie nicht allgemein einsetzbar sind.

DE-A 100 60 327 offenbart verfestigungsstabile Polyisocyanate, bei denen ein Teil der Isocyanatgruppen mit 3-Aminopropyltrialkoxysilanen umsetzt wurde. Nachteilig hierbei ist jedoch, dass die so modifizierten Isocyanatgruppen für eine Vernetzungsreaktion unter Bildung von Urethangruppen nicht zur Verfügung stehen, was Beschichtungseigenschaften, wie zum Beispiel Lösemittel- und Chemikalienbeständigkeiten negativ beeinflusst. Zusätzlich treten bei diesen silanmodifizierten Polyisocyanaten Unverträglichkeiten mit bestimmten Lackbindemitteln auf.

Die Aufgabe der vorliegenden Erfindung war es, neue blockierte Polyisocyanate bereit zustellen, deren organische Lösungen langzeitstabil sind und auch nach Monaten nicht zu Verfestigung z.B. durch Auskristallisation neigen.

Es konnte nun gefunden werden, dass Polyisocyanate, die durch gezielten Einbau von Alkylaminogruppen-haltigen Biuretstrukturen modifiziert wurden, nach Blockierung der freien NCO-Funktionen in Form ihrer organischen Lösungen lagerstabil sind und nicht mehr zu Verfestigung z.B. durch Auskristallisation neigen.

Gegenstand der Erfindung sind Polyisocyanate auf Basis aliphatischer und/oder cycloaliphatischer Düsocyanate,
- deren Isocyanatgruppen zu mindestens 95 mol-% mit mindestens einem Blockierungsmittel blockiert sind und die
- einen Gehalt an blockierten und freien NCO-Gruppen (berechnet als NCO, Molekulargewicht = 42) von 4,0 bis 21,0 Gew.-% aufweisen,
dadurch gekennzeichnet, dass diese Polyisocyanate 1 bis 20 Gew.-% Alkylaminogruppen der Formel R¹R²N, in der R¹ und R² unabhängig voneinander aliphatische oder cycloaliphatische C₁-C₁₂-Alkylreste sind, als Bestandteil von Biuretgruppen enthalten.

Ein weiterer Gegenstand der Erfindung ist ein Verfahren zur Herstellung der erfindungsgemäßen Polyisocyanate, bei dem
A) in einem ersten Schritt
   a) mindestens ein Polyisocyanat mit einem NCO-Gehalt (berechnet als NCO; Molekulargewicht = 42) von 8,0 bis 28,0 Gew.-% und einer mittleren NCO-Funktionalität ≥ 2 mit
   b) mindestens einem Alkylamin der Formel R¹R²NH, in der R¹ und R² unabhängig voneinander aliphatische, araliphatische oder cycloaliphatische C₁-C₁₂-Alkylreste sind, so umgesetzt wird, dass 2 bis 96 mol.-% der NCO-Gruppen aus a) zu Harnstoffgruppen umgesetzt werden und
B) diese Harnstoffgruppen anschließend ganz oder teilweise mit weiteren NCO-Gruppen aus a),
   c) gegebenenfalls in Anwesenheit eines Katalysators, zu Biuretgruppen weiter umgesetzt werden und
C) abschließend gegebenenfalls verbleibende freie NCO-Gruppen mit
   d) einem Blockierungsmittel zu mindestens 95 mol-% blockiert werden.

Als Polyisocyanate der Komponente a) können alle auf aliphatischen, cycloaliphatischen, araliphatischen Diisocyanaten basierende Uretdion-, Isocyanurat-, Allophanat-, Biuret-, Iminooxadiazindion- und/oder Oxadiazintriongruppen aufweisende Polyisocyanate einzeln oder in beliebigen Mischungen untereinander verwendet werden, wobei diese bevorzugt einen Restgehalt an monomeren Düsocyanaten von weniger als 0,5 Gew.-% aufweisen. Dabei ist es unerheblich, ob die zugrundeliegenden monomeren Di- oder Triisocyanate nach Phosgen- oder phosgenfreien Verfahren hergestellt wurden.

Als geeignete Düsocyanate sind beispielhaft die folgenden genannt: 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 2,6- und 2,4-Diisocyanato-1-methylcyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 2,4'- und 4,4'-Diisocyanatodicyclohexylmethan, 1-Isocyanato-1-methyl-4(3)isocyanato-methylcyclohexan (IMCI), Bis-(isocyanatomethyl)-norboman, 1,3- und 1,4-Bis-(2-isocyanato-prop-2-yl)-benzol (TMXDI).

Bevorzugt sind Polyisocyanate a) mit Isocyanuratstruktur und/oder Iminooxadiazindionstruktur auf Basis von Hexamethylendiisocyanat (HDI).

Als Alkylamin b) können sekundäre Amine der Formel R¹R²NH, bei denen R¹ und R² unabhängig voneinander für aliphatische, araliphatische oder cycloaliphatische C₁-C₁₂-Alkyl- oder Aralkylreste stehen, eingesetzt werden.

Besonders bevorzugt sind Düsopropylamin, N,N-*tert*-Butylbenzylamin, Dicyclohexylamin oder Gemische dieser Verbindungen, ganz besonders bevorzugt ist Diisopropylamin.

Als Blockierungsmittel d) können alle unter b) verwendeten Substanzen, sowie 1,2,4-Triazol, Acetessigsäurealkylester und Malonsäuredialkylester oder beliebige Gemische dieser Verbindungen eingesetzt werden. Besonders bevorzugt ist die Verwendung von Düsopropylamin, 1,2,4-Triazol, Acetessigsäurealkylester und Malonsäuredialkylester oder Gemische dieser Verbindungen. Ganz besonders bevorzugt ist die Verwendung von Diisopropylamin.

Eine bevorzugte Ausführungsform ist die Verwendung desselben Alkylamins als Biuretisierungsmittel in Komponente b) und Blockierungsmittel in Komponente d), insbesondere die Verwendung von Diisopropylamin für beide Zwecke. Entsprechend dieser bevorzugten Ausführungsform ist es möglich, zunächst eine größere Menge an Komponente b) zum Polyisocyanat a) zuzugeben und zum Harnstoff umzusetzen, als es zur Erreichung des unter c) genannten Gehaltes an Dialkylaminogruppen notwendig ist, und die entstandenen Harnstoffgruppen anschließend nur teilweise zum Biuret umzusetzen. Bevorzugt werden allerdings nur bis 50 Äquivalent-%, besonders bevorzugt nur bis 30 Äquivalent-% der vorhandenen NCO-Gruppen vor der Biuretisierung zu Harnstoffgruppen umgesetzt.

Bei dem erfindungsgemäßen Verfahren werden die Ausgangskomponenten a) und b) bei Temperaturen von 0 bis 180°C, vorzugsweise 20 bis 150°C so miteinander umgesetzt, dass zunächst alle Aminogruppen der Komponente b) durch Reaktion mit NCO-Gruppen zu Harnstoffen reagieren und diese primär gebildeten Harnstoffgruppen ggf. in Anwesenheit eines Katalysators c) anschließend zumindest teilweise zu Biuretgruppen weiterreagieren.

In einer bevorzugten Ausführungsform, wird die Reaktion des Polyisocyanates a) mit dem Biuretisierungsmittel b) so ausgeführt, dass die Umsetzung zum Harnstoff bei 0 bis 100°C, bevorzugt 20 bis 80°C durchgeführt wird, und anschließend die primär gebildeten Harnstoffgruppen mit freien Isocyanatgruppen bei 100 bis 180°C, bevorzugt 120 bis 150°C umgesetzt werden. Der Verlauf der Umsetzung kann beim erfindungsgemäßen Verfahren durch z. B. titrimetrische Bestimmung des NCO-Gehaltes verfolgt werden.

Möglich ist die Verwendung eines Katalysators c) zur Beschleunigung der Biuretisierungsreaktion. Beispielsweise eignen sich Säuren, vorzugsweise α,α,α-substituierte Essigsäurederivate, besonders bevorzugt Hydroxypivalinsäure und Pivalinsäure.

Die Menge des ggf. zu verwendenden Katalysators c) beträgt 0,0001 bis 5 Gew.-%, vorzugsweise 0,05 bis 1 Gew.-%, bezogen auf das Gesamtgewicht der Reaktionspartner a) und b).

Nach Erreichen des angestrebten NCO-Gehaltes wird die Reaktion zum Biuret abgebrochen. Dies kann beispielsweise durch Abkühlen des Reaktionsgemisches auf Raumtemperatur erfolgen.

Im Anschluss an die Biuretisierungsreaktion erfolgt die Umsetzung mit dem Blockierungsmittel d) zu den erfindungsgemäßen blockierten Polyisocyanaten.

Die Blockierungsreaktion erfolgt nach dem Fachmann bekannten Methoden durch direkte Umsetzung der verbleibenden freien NCO-Gruppen mit dem Blockierungsmittel d) im molaren Verhältnis von 0,95 bis 1,5, bevorzugt 0,98 bis 1,05, insbesondere 1:1.

Sollten als Komponenten b) und d) unterschiedliche Substanzen verwendet werden, so ist es ebenfalls möglich, einen Teil der vorhandenen NCO-Gruppen bereits vor Ende der Biuretisierungsreaktion mit dem Blockierungsmittel d) umzusetzen. Unabhängig von der Vorgehensweise liegen in den erfindungsgemäßen Polyisocyanaten die NCO-Gruppen zu mindestens 95 mol.-%, bevorzugt zu mindestens 98 mol.-%, besonders bevorzugt zu mindestens 99,5 mol.-% in blockierter Form vor.

Das erfindungsgemäße Verfahren kann gegebenenfalls in einem geeigneten, gegenüber Isocyanatgruppen inerten Lösemittel durchgeführt werden. Als Lösemittel geeignet sind beispielsweise die an sich üblichen Lacklösemittel, wie z.B. Ethylacetat, Butylacetat, 1-Methoxypropyl-2-acetat, 3-Methoxy-n-butylacetat, Aceton, 2-Butanon, 4-Methyl-2-pentanon, Cyclohexanon, Toluol, Xylol, N-Methylpyrrolidon, Chlorbenzol. Mischungen, die' vor allem höher substituierte Aromaten enthalten, wie sie beispielsweise unter den Bezeichnungen Solvent Naphtha, Solvesso^{®} (Exxon Chemicals, Houston, USA), Cypar^{®}, Cyclo Sol^{®}, Tolu Sol^{®}, Shellsol^{®} (alle von Shell Chemicals, Eschborn, DE) im Handel sind, sind ebenfalls geeignet. Die Zugabe der Lösemittel kann aber auch im Anschluss an die Herstellung der erfindungsgemäßen blockierten Polyisocyanate erfolgen, beispielsweise zur Erniedrigung der Viskosität. In diesem Fall können auch Alkohole, wie beispielsweise Isobutylalkohol verwendet werden, da dann die vorhandenen NCO-Gruppen vollständig mit den isocyanatreaktiven Gruppen der Komponenten b) und d) abreagiert sind.

Bevorzugte Lösemittel sind Aceton, Butylacetat, 2-Butanon, 1-Methoxypropyl-2-acetat, Xylol, Toluol, Isobutylalkohol, Mischungen, die vor allem höher substituierte Aromaten enthalten, wie sie beispielsweise unter den Bezeichnungen Solvent Naphtha, Solvesso^{®} (Exxon Chemicals, Houston, USA), Cypar^{®}, Cyclo Sol^{®}, Tolu Sol^{®}, Shellsol^{®} (alle von Shell Chemicals, Eschborn, DE) im Handel sind.

In einer bevorzugten Ausführungsform wird das Lösungsmittel erst nach beendeter Biuretisierungsreaktion (Schritt B)) zugesetzt.

Die erfindungsgemäßen Zusammensetzungen können als Bestandteil in Lacken oder zur Herstellung von Polyurethanwerkstoffen verwendet werden. Insbesondere können sie als Vernetzerkomponente in 1K-Einbrennlacken, insbesondere für die Kunststofflackierung, Automobil-Erstlackierung oder für das Coil Coating, verwendet werden.

Ein weiterer Gegenstand der Erfindung sind Einkomponenten-Einbrennsysteme enthaltend
I) ein oder mehrere blockierte Polyisocyanate der erfindungsgemäßen Art
II) ein oder mehrere gegenüber NCO-Gruppen reaktive Verbindungen einer mittleren Funktionalität bezogen auf diese Gruppen von > 1,5
III) gegebenenfalls Lösungsmittel
IV) gegebenenfalls Hilfsmittel und/oder Zusatzstoffe.

Für die Herstellung von 1K-Einbrennlacken werden die erfindungsgemäßen blockierten Polyisocyanate der Komponente I) mit den in der Lacktechnologie bekannten Lackbindemitteln der Komponente II), gegebenenfalls. unter Beimischung weiterer Bestandteile wie Lösemittel und/oder Hilfsmittel- und/oder Zusatzstoffe wie Weichmacher, Verlaufshilfsmittel, Pigmente, Füllstoffe, oder die Vernetzungsreaktion beschleunigende Katalysatoren, vermischt. Es ist darauf zu achten, dass beim Vermischen unterhalb der Temperatur gearbeitet wird, bei der die blockierten NCO-Gruppen mit den übrigen Bestandteilen reagieren können. Bevorzugt fmdet das Vermischen bei Temperaturen zwischen 15 und 100°C statt.

Die in den 1K-Einbrennlacken als Lackbindemittel verwendeten Verbindungen, die mit den erfindungsgemäßen Zusammensetzungen vemetzt werden enthalten im Mittel mindestens 1,5, bevorzugt mindestens 2 mit NCO-Gruppen reaktive Gruppen pro Molekül, wie beispielsweise Hydroxyl-, Mercapto-, ggf. substituierte Amino- oder Carbonsäuregruppen.

Bevorzugt handelt es sich bei den verwendeten Lackbindemitteln um Di- und Polyhydroxylverbindungen, wie Polyhydroxypolyester, Polyhydroxypolyether oder andere Hydroxylgruppen aufweisende Polymerisate, z.B. die an sich bekannten Polyhydroxypolyacrylate mit einer Hydroxylzahl von 20 bis 200 mg KOH/g, vorzugsweise von 50 bis 130 mg KOH/g, bezogen auf 100 %ige Produkte, oder Polyhydroxycarbonate oder Polyhydroxyurethane.

Beispiele geeigneter Polyesterpolyole sind insbesondere die in der Polyurethanchemie an sich bekannten Umsetzungsprodukte von mehrwertigen Alkoholen, beispielsweise von Alkanpolyolen wie Neopentylglykol, Ethylenglycol, 1,2- und/oder 1,3-Propandiol, 1,2- und/oder 1,3- und/oder 1,4-Butandiol, Trimethylolpropan, Glycerin, Pentaerythrit, 1,5-Pentandiol, 1,6-Hexandiol, mit unterschüssigen Mengen Polycarbonsäuren bzw. Polycarbonsäureanhydriden, insbesondere Dicarbonsäuren bzw. Dicarbonsäureanhydriden. Geeignete Polycarbonsäuren oder Polycarbonsäureanhydride sind beispielsweise Korksäure, Oxalsäure, Bernsteinsäure, Itaconsäure, Pimelinsäure, Azelainsäure, Adipinsäure, Phthalsäure, Isophthalsäure, Tetrahydrophthalsäure, Hexahydrophthalsäure, Maleinsäure, deren Diels-Alder-Addukte mit Cyclopentadien, Fumarsäure oder dimere bzw. trimere Fettsäuren, sowie die Anhydride der genannten Säuren. Bei der Herstellung der Polyesterpolyole können selbstverständlich beliebige Gemische der beispielhaft genannten mehrwertigen Alkohole oder beliebige Gemische der beispielhaft genannten Säuren bzw. Säureanhydride eingesetzt werden. Die Polyesterpolyole weisen beispielsweise ein zahlenmittleres Molekulargewicht (Mₙ) von 500 bis 10 000 g/Mol, vorzugsweise 800 bis 5000 g/Mol, besonders bevorzugt 1000 bis 3000 g/Mol auf.

Die Herstellung der Polyesterpolyole erfolgt nach bekannten Methoden, wie z.B. in Houben-Weyl, Methoden der organischen Chemie, Band XIV/2, G. Thieme-Verlag, 1963, Seiten 1 bis 47 beschrieben sind. Eine gegebenenfalls erforderliche hydrophile Modifizierung dieser Polyhydroxylverbindungen erfolgt nach an sich bekannten Methoden, wie sie beispielsweise in EP-A 157 291 oder EP-A 427 028 beschrieben sind.

Geeignete Polyetherpolyole sind die aus der Polyurethanchemie an sich bekannten Ethoxylierungs- und/oder Propoxylierungsprodukte geeigneter 2- bis 4-wertiger Startermoleküle wie z.B. Wasser, Ethylenglykol, Propandiol, Tri-methylolpropan, Glycerin und/oder Pentaerythrit.

Bei den Polyhydroxylpolyacrylaten handelt es sich um an sich bekannte Mischpolymerisate von Styrol mit einfachen Estern der Acrylsäure und/oder Methacrylsäure, wobei zwecks Einführung der Hydroxylgruppen Hydroxyalkylester, wie beispielsweise die 2-Hydroxyethyl-, 2-Hydroxypropyl-, 2-, 3- oder 4-Hydroxybutylester dieser Säuren mitverwendet werden.

Es können auch wasserhaltige 1K-Polyurethanlacke hergestellt werden, indem die gegebenenfalls lösemittelhaltigen erfindungsgemäßen blockierten Polyisocyanate zusammen mit einem hydrophil modifizierten hydroxylgruppenhaltigen Polymer in Wasser dispergiert werden. Hydrophil modifizierten hydroxylgruppenhaltigen Polymere können als hydrophilierende Gruppen anionische, kationische und nicht ionische Gruppen, beispielsweise Sulfonat-, Carboxylat- und Polyethergruppen, enthalten.

Die in Verbindung mit Di- und Polyolen erhaltenen 1K-Polyurethanlacke eignen sich besonders zur Herstellung von hochwertigen Beschichtungen. Das Äquivalentverhältnis von NCO-reaktiven Gruppen zu blockierten und nicht blockierten NCO-Gruppen liegt dabei bevorzugt von 0,5 bis 3, besonders bevorzugt 0,90 bis 1,50, ganz besonders bevorzugt 1,00 bis 1,25.

Zusätzlich zu den erfindungsgemäßen Polyisocyanaten können gegebenenfalls weitere, gegenüber den Verbindungen der Komponente II) reaktive Verbindungen als weitere Vernetzerkomponente eingesetzt werden. Beispielsweise sind dies Epoxidgruppen enthaltende Verbindungen und/oder Aminoplastharze. Als Aminoplastharze sind die in der Lacktechnologie bekannten Kondensationsprodukte von Melamin und Formaldehyd, bzw. Harnstoff und Formaldehyd anzusehen. Geeignet sind alle herkömmlichen, nicht oder mit gesättigten Monoalkoholen mit 1 bis 4 C-Atomen veretherten Melamin-Formaldehyd-Kondensate. Im Falle der Mitverwendung anderer Vernetzerkomponenten muss die Menge an Bindemittel mit NCO-reaktiven. Gruppen entsprechend angepasst werden.

Optionale Hilfsmittel oder Zusatzstoffe sind beispielsweise Antioxidantien wie 2,6-Di-tert-butyl-4-methylphenol, UV-Absorber vom Typ 2-Hydroxyphenyl-benzotriazol oder Lichtschutzmittel vom Typ der am Stickstoffatom substituierten oder unsubstituierten HALS-Verbindungen wie Tinuvin^{®} 292 und Tinuvin^{®} 770 DF (Ciba Spezialitäten GmbH, Lampertheim, DE) oder andere handelsübliche Stabilisierungsmittel, wie sie beispielsweise in "Lichtschutzmittel für Lacke" (A. Valet, Vincentz Verlag, Hannover, 1996) und "Stabilization of Polymeric Materials" (H. Zweifel, Springer Verlag, Berlin, 1997, Appendix 3, S. 181-213) beschrieben sind, oder beliebige Gemische dieser Verbindungen. Weiterhin können auch hydrazidgruppenhaltige und/oder hydroxyfunktionelle Stabilisatoren wie das in EP-A 0 829 500 beschriebene Additionsprodukt von Hydrazin an Propylencarbonat verwendet werden.

Die bevorzugte Verwendung ist die in Lösemittellacken. Selbstverständlich auch möglich ist die Verwendung in wässrigen Lacken oder, wenn auch weniger bevorzugt, die in Pulverlacken.

Diese Lacke können zur Beschichtung verschiedener Substrate verwendet werden, insbesondere zur Beschichtung von Metallen und Kunststoffen. Die Substrate können bereits mit anderen Lackschichten beschichtet sein, so dass durch die Beschichtung mit dem Lack, der die erfindungsgemäße Zusammensetzung enthält, eine weitere Lackschicht aufgebracht wird.

Die erfindungsgemäßen blockierten Polyisocyanate können zur Herstellung von Einbrennlacken, z.B. für die Industrielackierung und bei der Automobilerstlackierung verwendet werden. Hierzu können die erfindungsgemäßen Überzugsmittel durch Rakeln, Tauchen, Spritzauftrag wie Druckluft- oder Airless-Spritzen, sowie durch elektrostatischen Auftrag, beispielsweise Hochrotationsglockenauftrag, aufgetragen werden.

Die zu beschichtenden Substrate können bereits mit anderen Lackschichten beschichtet sein, so dass durch die Beschichtung mit dem Lack, der die erfmdungsgemäße Zusammensetzung enthält, eine weitere Lackschicht aufgebracht wird. Die Trockenfilm-Schichtdicke kann dabei beispielsweise bei 10 bis 120 µm liegen. Das Aushärten der getrockneten Filme erfolgt durch Einbrennen in Temperaturbereichen von 90 bis 160°C, bevorzugt 110 bis 140°C. Die erfmdungsgemäßen blockierten Polyisocyanate können zur Herstellung von Einbrennlacken für die kontinuierliche Bandbeschichtung eingesetzt werden, wobei maximale Einbrenntemperaturen, dem Fachmann als Peak Metal Temperaturen (PMT) bekannt, zwischen 130 und 300°C, bevorzugt 190 bis 260°C, und Trockenfilm-Schichtdicken von beispielsweise 3 bis 40 µm erreicht werden können.

### Beispiele

In den nachfolgenden Beispielen sind, sofern nicht anders angegeben, alle Prozentangaben Gew.-%.
Bei Festkörpergehalt und BNCO-Gehalt handelt es sich um berechnete Größen, die folgendermaßen berechnet werden:
Festkörpergehalt in % = [(Gesamtgewicht-Gesamtgewicht der Lösemittel) dividiert durch Gesamtgewicht] multipliziert mit 100
BNCO-Gehalt in % = [(val blockierter NCO-Gruppen multipliziert mit 42) dividiert durch Gesamtgewicht] multipliziert mit 100.

Die Ermittlung des NCO-Gehaltes erfolgte durch Titration gemäß DIN 53 185.

Das Ende der Blockierungsreaktion wurde durch IR-spektroskopische Messungen auf einem Arid-Zone^{®} Spektrometer der Firma Bomen, Québec, Kanada detektiert (NCO-Schwingung 2200 bis 2250 cm⁻¹).

Unter der Angabe Raumtemperatur werden 23 ± 3°C verstanden.

### Ausgangsstoffe:

### Polyisocyanat 1

Isocyanuratgruppen enthaltendes Polyisocyanat auf Basis von HDI mit einem NCO-Gehalt (bezogen auf NCO, Molekulargewicht = 42) von 21,7 Gew.-%, mit einer mittleren Isocyanatfunktionalität von 3,4 (nach GPC) und einem Gehalt an monomerem HDI von 0,1%. Viskosität bei Raumtemperatur 3000 mPas.

### Polyisocyanat 2

Iminooxadiazindiongruppen enthaltendes Polyisocyanat auf Basis von HDI mit einem NCO-Gehalt (bezogen auf NCO, Molekulargewicht = 42) von 23,2 Gew.-%, mit einer mittleren Isocyanatfunktionalität von 3,3 (nach GPC) und einem Gehalt an monomerem HDI von 0,1%, hergestellt nach EP-A 798299. Viskosität bei Raumtemperatur 700 mPas.

### Beispiel 1 (erfindungsgemäß)

### Diisopropylamin-Biuretgruppen-haltiges Polyisocyanat, Diisopropylamin-blockiert

193,5 g (1,00 val) des Polyisocyanates 1 wurden unter Rühren und trockenem Stickstoff mit 50,5 g (0,5 val) Diisopropylamin versetzt, wobei eine leichte Exothermie beobachtet wurde. Der Ansatz wurde weiter auf 140°C erwärmt und nach Zugabe von 1,00 g Hydroxypivalinsäure 5 h bei dieser Temperatur gerührt. Zu diesem Zeitpunkt wurde ein NCO-Gehalt von 5,5 Gew.-% (entsprechend 0,32 val NCO) gemessen, und der Ansatz wurde auf Raumtemperatur abgekühlt, mit 75 g Isobutanol und 75 g Methoxypropylacetat (MPA) verdünnt und anschließend mit 32,3 g Diisopropylamin versetzt. Nach Ende der Blockierungsreaktion (Verschwinden der NCO-Bande im IR-Spektrum) wurden 426,3 g eines farblosen, klaren Produktes mit folgenden Kenndaten erhalten:
Viskosität bei 23°C: 3200 mPas
Gehalt an Alkylaminogruppen NCH(CH₃)₂ in Biuretgruppen: 4,3 % (0,18 val)
Gehalt an blockierten NCO-Gruppen (M = 42): 8,1 % (0,82 val BNCO)
Festkörpergehalt: 64,8 %

Nach 3-monatiger Lagerung des Produktes bei Raumtemperatur war weder eine Trübung der Lösung noch jegliche Art von Feststoffausfällung oder Kristallisation zu beobachten.

### Beispiel 2 (erfindungsgemäß)

### Diisopropylamin-Biuretgruppen-haltiges Polyisocyanat, Diisopropylämin-blockiert

181,0 g (1,00 val) des Polyisocyanates 2 wurden unter Rühren und trockenem Stickstoff mit 5,05 g (0,05 val) Diisopropylamin versetzt, wobei eine leichte Exothermie beobachtet wurde. Der Ansatz wurde weiter auf 140°C erwärmt und 2 h bei dieser Temperatur gerührt. Zu diesem Zeitpunkt wurde ein NCO-Gehalt von 20,3 Gew.-% (entsprechend 0,90 val NCO) gemessen und der Ansatz wurde auf Raumtemperatur abgekühlt, mit 75 g Isobutanol und 75 g Methoxypropylacetat (MPA) verdünnt und anschließend mit 90,9 g Diisopropylamin versetzt. Nach Ende der Blockierungsreaktion (Verschwinden der NCO-Bande in IR-Spektrum) wurden 426,95 g eines farblosen, klaren Produktes mit folgenden Kenndaten erhalten:
Viskosität bei 23°C: 2590 mPas
Gehalt an Alkylaminogruppen NCH(CH₃)₂ in Biuretgruppen: 2,4 % (0,1 val)
Gehalt an blockierten NCO-Gruppen (M = 42): 8,6% (0,9 val)
Festkörpergehalt: 65 %

Nach 3-monatiger Lagerung des Produktes bei Raumtemperatur war weder eine Trübung der Lösung noch jegliche Art von Feststoffausfällung oder Kristallisation zu beobachten.

Im Folgenden wird die Herstellung eines Produktes auf Basis des gleichen Ausgangspolyisocyanates und des gleichen Blockierungsmittels beschrieben, welches keine Biuretgruppen enthält.

### Beispiel 3 (Vergleich)

### Isocyanuratgruppen-haltiges Polyisocyanat, Diisopropylamin-blockiert

193,5 g des Polyisocyanates 1 wurden mit 79,3 g Methoxypropylacetat (MPA) verdünnt und unter Rühren und trockenem Stickstoff mit 101,0 g Diisopropylamin versetzt, wobei eine leichte Exothermie beobachtet wurde. Es wurde nach vollständiger Zugabe auf 70°C erwärmt und nach 30 min Rühren bei dieser Temperatur wurde der Ansatz auf Raumtemperatur abgekühlt. Anschließend waren im IR-Spektrum keine freien Isocyanat-Gruppen mehr nachweisbar. Abschließend wurde mit weiteren 79,3 g Isobutanol verdünnt und es wurde ein klares, fast farbloses Produkt mit folgenden Kenndaten erhalten.

Viskosität bei 23°C: 2070 mPas
Gehalt an blockierten NCO-Gruppen (Molekulargewicht = 42): 9,3 %
Festkörper-Gehalt: 65 %

Nach 14 Tagen Lagerung bei Raumtemperatur setzte eine Verfestigung durch Kristallisation ein. Nach 18 Tagen Lagerung bei Raumtemperatur war eine feste, weiße undurchsichtige Masse entstanden.

### Beispiel 4 (Vergleich)

### Iminooxadiazintriongruppen-haltiges Polyisocyanat, Diisopropylamin-blockiert

181,0 g des Polyisocyanats 2 wurde mit 76,0 g Methoxypropylacetat (MPA) verdünnt und unter Rühren und trockenem Stickstoff mit 101,0 g Diisopropylamin versetzt, wobei eine leichte Exothermie beobachtet wurde. Nach vollständiger Zugabe wurde auf 70°C erwärmt. Nach 30 min Rühren bei dieser Temperatur wurde der Ansatz auf Raumtemperatur abgekühlt. Nach dieser Zeit waren im IR-Spektrum keine freien Isocyanat-Gruppen mehr nachweisbar. Anschließend wurde mit weiteren 76,0 g Isobutanol verdünnt und es wurde ein klares, fast farbloses Produkt mit folgenden Kenndaten erhalten.

Viskosität bei 23°C: 1560 mPas
Gehalt an blockierten NCO-Gruppen (Molekulargewicht = 42): 9,7 %
Festkörper-Gehalt: 65 %

Nach 14 Tagen Lagerung bei Raumtemperatur setzte eine Verfestigung durch Kristallisation ein. Nach 18 Tagen Lagerung bei Raumtemperatur war eine feste, weiße undurchsichtige Masse entstanden.

### Beispiel 5 (erfindungsgemäß)

### Diisopropylamin-Biuretgruppen-haltiges Polyisocyanat, Malonsäurediethylester-blockiert

193,5 g (1,00 val) des Polyisocyanates 1 wurden unter Rühren und trockenem Stickstoff mit 5,05 g (0,05 val) Diisopropylamin versetzt, wobei eine leichte Exothermie beobachtet wurde. Der Ansatz wurde weiter auf 140°C erwärmt und 2 h bei dieser Temperatur gerührt. Zu diesem Zeitpunkt wurde ein NCO-Gehalt von 19,0 Gew.-% (entsprechend 0,90 val NCO) gemessen und der Ansatz wurde auf Raumtemperatur abgekühlt und mit 183,3 g Butylacetat verdünnt. Man gab 96 g Malonsäurediethylester zu und tropfte ein Gemisch aus 48 g Malonsäurediethylester, 0,65 g Natriummethylat und 1,5 g Methanol so zu, dass bei der exothermen Reaktion die Temperatur 70°C nicht überstieg. Nach 120 min Rühren bei dieser Temperatur wurde der Ansatz abgekühlt. Nach diesem Zeitpunkt waren im IR-Spektrum keine freien Isocyanat-Gruppen mehr nachweisbar. Man erhielt 526,5 g eines farblosen, klaren Produktes mit folgenden Kenndaten:
Viskosität bei 23°C: 2200 mPas
Gehalt an Alkylaminogruppen NCH(CH₃)₂ in Biuretgruppen: 1,9 % (0,1 val)
Gehalt an blockierten NCO-Gruppen (M = 42): 7,2 % (0,9 val)
Festkörpergehalt: 65 %

Im Folgenden wird die Herstellung eines Produktes auf Basis des gleichen Ausgangspolyisocyanates und des gleichen Blockierungsmittels beschrieben, welches keine Biuretgruppen enthält.

### Beispiel 6 (Vergleich)

### Isocyanuratgruppenhaltiges Polyisocyanat, Malonsäurediethylester-blockiert

Zu einem Gemisch aus 193,5 g des Polyisocyanates A1), 152,5 g Butylacetat und 106,7 g Malonsäurediethylester tropfte man unter Rühren und trockenem Stickstoff ein Gemisch aus 53,3 g Malonsäurediethylester, 0,72 g Natriummethylat und 1,68 g Methanol so zu, dass bei der exothermen Reaktion die Temperatur 70°C, nicht überstieg. Nach 120 min Rühren bei dieser Temperatur wurde der Ansatz abgekühlt. Nach diesem Zeitpunkt waren im IR-Spektrum keine freien Isocyanat-Gruppen mehr nachweisbar. Man erhielt ein klares, hellgelbes Produkt mit folgenden Kenndaten.

Gehalt an blockierten NCO-Gruppen (Molekulargewicht = 42): 8,3 %
NCO-Funktionalität (GPC): 3,4
Festkörper-Gehalt: 70 %

Nach 24 h Lagerung bei Raumtemperatur zeigten sich erste Anzeichen einer Kristallisation, nach 48 h Lagerung bei Raumtemperatur war eine feste, klare, hellgelbe Masse entstanden. Bei dem Produkt aus Beispiel 5 war nach 14 Tagen Lagerung bei Raumtemperatur noch kein Anzeichen einer Kristallisation zu erkennen. Daraus geht deutlich hervor; dass die erfindungsgemäßen blockierten Polyisocyanate gegen Kristallisation stabilisiert sind.

### Beispiel 8

### Herstellung und Prüfung der Eigenschaften von Lacken basierend auf einigen in den Beispielen beschriebenen Polyisocyanaten (erfindungsgemäß und Vergleich)

Basierend auf dem blockierten Polyisocyanat aus Beispiel 1 und dem hydroxyfunktionellen Polyesterpolyol Desmophen^{®} T 1665 der Firma Bayer AG, Leverkusen, DE (Hydroxylgehalt, lösemittelfrei nach DIN 53 240/2 ca. 2,6 %, 65 % in Solventnaphtha^{®} 100/Isobutanol 31,5:3,5, Äquivalentgewicht 1000), wurde ein Coil-Coating-Lack hergestellt. Weiterhin wurden das Weißpigment Tronox^{®} R-KB-4 der Firma Kerr-McGee, Krefeld-Uerdingen, DE sowie als weitere Additive Celluloseacetobutyrat CAB 531-1 der Firma Krahn Chemie GmbH, Hamburg, DE, Dibutylzinndilaurat der Firma Brenntag, Mühlheim/Ruhr, DE, Acronal^{®} 4 F der Firma BASF AG, Ludwigshafen, DE, sowie als Lösemittel Solvesso^{®} 200 S der Firma Deutsche Exxon, Köln, DE verwendet.

**Tabelle 1 Zusammensetzung der Lacke**

| Lack | Polyisocyanat | | Desmophen^{®} | Äquiv.-Verhältnis |
|---|---|---|---|---|
| | | | T 1665 | NCO:OH |
| I | Beispiel 1 | 100 g | 192,9 g | 1:1 |
| II | Beispiel 1 | 100 g | 241,1 g | 1:1,5 |
| III | Beispiel 3 | 100 g | 221,4 g | 1:1 |
| IV | Beispiel 3 | 100 g | 276,8 g | 1:1,5 |

Die Lacke wurden so formuliert, dass das Verhältnis von Hydroxylgruppen des Polyesters zu den blockierten NCO-Gruppen des Polyisocyanates 1:1 oder 1,5:1, das Verhältnis der nichtflüchtigen Bestandteile des Polyisocyanates und des Polyesters zum Pigment 1:1 betrug. Die Lacke enthielten, bezogen auf den Anteil der nichtflüchtigen. Bestandteile des Polyisocyanates und des Polyesters 0,3 Gew.-% Dibutylzinndilaurat, 1,2 Gew.-% CAB 531-1 und 0,3% Acronal^{®} 4 F. Die Applikationsviskosität wurde auf einen Wert von 100 s (DIN EN ISO 2431, Becher mit 5 nun Düse / 23°C) durch Verdünnung mit Solvesso^{®} 200 S eingestellt.

Die Lacke wurden im Rakelauftrag auf ein chromatiertes Aluminiumblech aufgetragen und in einem Coil Coating-Versuchsofen der Firma Aalborg bei 350°C jeweils so lange eingebrannt, dass die in Tabelle 2 angegebenen Peak Metal Temperaturen (PMT) erreicht wurden.

**Tabelle 2 Prüfergebnisse der Lacke**

| Lacke | | I | II | III | IV |
|---|---|---|---|---|---|
| | | | | Vergleich | Vergleich |
| Schichtdicke [µm] | | 20 | 20 | 20 | 20 |
| [ECCA T1] (*1) | | | | | |
| Glanz nach Gardner | | 45/78 | 45/75 | 47/69 | 57/74 |
| bei 20° / 60° [ECCA-T2] (*1) | | | | | |
| Weißgrad nach Berger | | 92,4 | 92,9 | 92,4 | 92,5 |
| (bei PMT 254°C) (*2) | | | | | |
| MEK-Wischtest bei PMT199°C, | | 75 | 60 | 10 | 4 |
| Druck: ca. 2 kg (*3) | | | | | |
| MEK-Wischtest bei PMT204°C, | | >100 | >100 | <99 | >100 |
| Druck: ca. 2 kg | | | | | |
| MEK-Wischtest bei PMT210°C, | | >100 | >100 | >100 | >100 |
| Druck: ca. 2 kg | | | | | |
| MEK-Wischtest bei PMT216°C, | | >100 | >100 | >100 | >100 |
| Druck: ca. 2 kg | | | | | |
| Mikrohärte Eindringtiefe | [µm]HU | 155,7 | 155,5 | 158,2 | 157,0 |
| korr. N/mm² (*4) | | | | | |
| **Erichsentiefung** | | GT 0 | GT 0 | GT0 | GT0 |
| Gitterschnitt | [6mm] | | | | |
| [ECCA-T6] (*1) | | | | | |

| | | | | | |
|---|---|---|---|---|---|
| (*1) Normen der European Coil Coating Association (*2) Gemessen mit Gerät vom Typ color-guide *sphere* der Firma Byk-Gardner nach der CIE-L*a*b* Skala (*3) Doppelhübe bis zur Erweichung des Lackfilmes (*4) Gemessen mit dem Fischerscope H100 SMC der Firma Fischer | | | | | |

Bei den beiden Lacken III und IV hatte sich nach 30 Tagen ein Feststoff abgesetzt, während die das erfindungsgemäße blockierten Polyisocyanat aus Beispiel 1 enthaltenden Lacke I und II auch nach mehr als 3 Monaten Lagerung kein Anzeichen einer Kristallisation zeigten.

## Patentansprüche

1. Polyisocyanate auf Basis aliphatischer, araliphatischer und/oder cycloaliphatischer Diisocyanate,
- deren Isocyanatgruppen zu mindestens 95 mol-% mit mindestens einem Blockierungsmittel blockiert sind und die einen Gehalt an blockierten und freien NCO-Gruppen (berechnet als NCO, Molekulargewicht = 42) von 4,0 bis 21,0 Gew.-% aufweisen,
**dadurch gekennzeichnet, dass** diese Polyisocyanate 1 bis 20 Gew.-% Alkylaminogruppen der Formel R¹R²N, in der R¹ und R² unabhängig voneinander aliphatische, araliphatischer oder cycloaliphatische C₁-C₁₂-Reste sind, als Bestandteil von Biuretgruppen enthalten.

2. Polyisocyanate gemäß Anspruch 1, **dadurch gekennzeichnet, dass** die Alkylaminogruppen der Formel R¹R²N Diisopropylamino-, N,N-*tert*-Butylbenzylamino- und/oder Dicyclohexylaminogruppen sind.

3. Verfahren zur Herstellung der Polyisocyanate gemäß Anspruch 1, bei dem
A) in einem ersten Schritt
a) mindestens ein Polyisocyanat mit einem NCO-Gehalt (berechnet als NCO; Molekulargewicht = 42) von 8,0 bis 28,0 Gew.-% und einer mittleren NCO-Funktionalität ≥ 2 mit
b) mindestens einem Alkylamin der Formel R¹R²NH, in der R¹ und R² unabhängig voneinander aliphatische, araliphatische oder cycloaliphatische C₁-C₁₂-Reste sind, so umgesetzt wird, dass 2 bis 96 mol.-% der NCO-Gruppen aus a) zu Harnstoffgruppen umgesetzt werden und
B) diese Harnstoffgruppen anschließend ganz oder teilweise mit weiteren NCO-Gruppen aus a),
c) gegebenenfalls in Anwesenheit eines Katalysators, zu Biuretgruppen weiter umgesetzt werden und
C) abschließend gegebenenfalls verbleibende freie NCO-Gruppen mit
d) einem Blockierungsmittel zu mindestens 95 mol-% blockiert werden.

4. Verfahren gemäß Anspruch 3, **dadurch gekennzeichnet, dass** als Alkylamin der Komponente b) Diisopropylamin, N,N-*tert*-Butylbenzylamin, Dicyclohexylamin und/oder deren Gemische eingesetzt werden.

5. Verfahren gemäß Anspruch 3 oder 4, **dadurch gekennzeichnet, dass** als Katalysator-Komponente c) 0,05. bis 1 Gew.-% Hydroxypivalinsäure oder Pivalinsäure verwendet wird.

6. Verwendung der Polyisocyanate gemäß Anspruch 1 oder 2 zur Herstellung von Beschichtungen oder Formkörpern.

7. Einkomponenten-Beschichtungsmittel enthaltend
I) ein oder mehrere blockierte Polyisocyanate gemäß Anspruch 1 oder 2,
II) ein oder mehrere gegenüber NCO-Gruppen reaktive Verbindungen einer mittleren Funktionalität bezogen auf diese Gruppen von > 1,5
III) gegebenenfalls Lösungsmittel und
IV) gegebenenfalls Hilfsmittel und/oder Zusatzstoffe.

8. Beschichtungen erhältlich aus Beschichtungsmitteln gemäß Anspruch 7.

9. Substrate beschichtet mit Beschichtungen gemäß Anspruch 8.

## Claims

1. Polyisocyanates based on aliphatic, araliphatic and/or cycloaliphatic diisocyanates
- at least 95 mol% of whose isocyanate groups are blocked with at least one blocking agent and which
- contain from 4.0 to 21.0% by weight of blocked and free NCO groups (calculated as NCO, molecular weight = 42),
**characterized in that** these polyisocyanates contain from 1 to 20% by weight of alkylamino groups of the formula R¹R²N, in which R¹ and R² independently of one another are aliphatic, araliphatic or cycloaliphatic C₁-C₁₂ radicals, as a constituent of biuret groups.

2. Polyisocyanates according to Claim 1, **characterized in that** the alkylamino groups of the formula R¹R²N are diisopropylamino, N,N-*tert-*butylbenzylamino and/or dicyclohexylamino groups.

3. Process for preparing the polyisocyanates according to Claim 1, in which
A) in a first step
a) at least one polyisocyanate having an NCO content (calculated as NCO; molecular weight = 42) of from 8.0 to 28.0% by weight and an average NCO functionality ≥ 2 is reacted with
b) at least one alkylamine of the formula R¹R²NH, in which R¹ and R² independently of one another are aliphatic, araliphatic or cycloaliphatic C₁-C₁₂ radicals such that from 2 to 96 mol% of the NCO groups from a) are converted into urea groups, and
B) some or all of these urea groups are subsequently further reacted with further NCO groups from a),
c) optionally in the presence of a catalyst, to give biuret groups, and
C) finally any remaining free NCO groups are blocked with
d) a blocking agent to an extent of at least 95 mol%.

4. Process according to Claim 3, **characterized in that** diisopropylamine, N,N-*tert*-butylbenzylamine, dicyclohexylamine and/or mixtures thereof are used as alkylamine of component b).

5. Process according to Claim 3 or 4, **characterized in that** from 0.05 to 1% by weight of hydroxypivalic acid or pivalic acid is used as catalyst component c).

6. Use of the polyisocyanates according to Claim 1 or 2 for producing coatings or mouldings.

7. One-component coating compositions comprising
I) one or more blocked polyisocyanates according to Claim 1 or 2,
II) one or more NCO-reactive compounds with an average functionality relative to these groups of > 1.5
III) optionally solvents and
IV) optionally auxiliaries and/or additives.

8. Coatings obtainable from coating compositions according to Claim 7.

9. Substrates coated with coatings according to Claim 8.

## Revendications

1. Polyisocyanates à base de diisocyanates aliphatiques, araliphatiques et/ou cycloaliphatiques,
- dont les groupes isocyanate sont bloqués pour au moins 95 mol % par au moins un agent bloquant et
- qui ont une teneur en groupes NCO libres et bloqués (exprimée en NCO, poids moléculaire 42) de 4,0 à 21,0 % en poids,
et qui se caractérisent en ce qu'ils contiennent de 1 à 20 % en poids de groupes alkylamino de formule R¹R²N, dans laquelle R¹ et R² représentent chacun, indépendamment l'un de l'autre des groupes aliphatiques, araliphatiques ou cycloaliphatiques en C₁-C₁₂, en tant que constituants de groupes biuret.

2. Polyisocyanates selon la revendication 1, **caractérisés en ce que** les groupes alkylamino de formule R¹R²N sont des groupes diisopropylamino, N,N-tert-butylbenzylamino et/ou dicyclohexylamino.

3. Procédé pour la préparation des polyisocyanates selon la revendication 1, selon lequel
A) dans un premier stade opératoire
a) on fait réagir au moins un polyisocyanate à une teneur en NCO (exprimée en NCO ; poids moléculaire = 42) de 8,0 à 28,0 % en poids et à une fonctionnalité moyenne en groupes NCO supérieure ou égale à 2 avec
b) au moins une alkylamine de formule R¹R²N dans laquelle R¹ et R² représentent chacun, indépendamment l'un de l'autre, des groupes aliphatiques, araliphatiques ou cycloaliphatiques en C₁-C₁₂, en sorte que 2 à 96 mol % des groupes NCO de a) soient convertis en groupes urée, et
B) on fait ensuite réagir ces groupes urée en totalité ou en partie avec d'autres groupes NCO de a),
c) le cas échéant en présence d'un catalyseur, avec formation de groupes biuret et
C) on bloque pour terminer les groupes NCO libres résiduels éventuels avec
d) un agent bloquant, pour au moins 95 mol %.

4. Procédé selon la revendication 3, **caractérisé en ce que** l'on utilise en tant qu'alkylamine du composant b) la diisopropylamine, la N,N-*tert*-butylbenzylamine, la dicyclohexylamine et/ou leurs mélanges.

5. Procédé selon la revendication 3 ou 4, **caractérisé en ce que** le composant catalyseur c) utilisé en proportions de 0, 05 à 1 % en poids est l'acide hydroxypivalique ou l'acide pivalique.

6. Utilisation des polyisocyanates selon la revendication 1 ou 2, pour l'application de revêtements ou la fabrication d'objets moulés.

7. Produit de revêtement à un composant contenant
I) un ou plusieurs polyisocyanates bloqués selon la revendication 1 ou 2,
II) un ou plusieurs composés réactifs à l'égard des groupes NCO et ayant une fonctionnalité moyenne en ces groupes supérieure à 1,5,
III) le cas échéant un solvant, et
IV) le cas échéant des produits auxiliaires et/ou additifs.

8. Revêtements obtenus à l'aide de produits de revêtement selon la revendication 7.

9. Substrats portant des revêtements selon la revendication 8.
